# EUROPÄISCHE PATENTANMELDUNG

(11) **EP 2 223 601 A1**
(43) Veröffentlichungstag der Anmeldung: **01.09.2010**
(21) Anmeldenummer: 10150604.6
(22) Anmeldetag: 13.01.2010
(51) Int. Cl.: A01P 3/00, A01N 25/02, A01N 37/20, A01N 43/50, A01N 43/653, C08K 5/20, C08K 5/3445

(54) **Zusammensetzungen enthaltend Reaktionsprodukte aus Alkylamidoaminen, Alkylaminoimidazolinen und freiem Amin sowie deren Verwendung**

(30) Priorität: 30.01.2009 DE 102009000505
(71) Anmelder: Evonik Goldschmidt GmbH, 45127 Essen (DE)
(72) Erfinder: Giessler-Blank, Sabine, Dr., 44227 Dortmund (DE); Ballandies, Jürgen, 45277 Essen (DE); Linke, Ute, 40822 Mettmann (DE)

(57) **Zusammenfassung**

Zusammensetzungen enthaltend Reaktionsprodukte aus Alkylamidoaminen, Alkylaminoimidazolinen und freiem Amin sowie Verfahren zu deren Herstellung und deren Verwendung als Lösemittel in agrochemischen Formulierungen.

## Beschreibung

Die Erfindung betrifft den Einsatz von speziellen Fettsäure-Reaktionsprodukten bestehend aus Alkylamidoaminen, Alkylaminoimidazolinen und freiem Amin als Lösemittel mit kristallisationsinhibierender Wirkung.

Agrochemische Wirkstoffe für den Pflanzenschutz aber auch für Anwendungen im non-crop Bereich werden meist in speziellen Formulierungen dargereicht, um eine einfache Handhabung zu gewährleisten. Zum non-crop-Bereich zählen beispielsweise Landschaftsgestaltung, Haus & Garten-Anwendungen wie beispielsweise Schädlingsbekämpfung, Rasenbehandlung wie beispielsweise auf Golfplätzen, sowie der Holzschutz.

Die Art der Formulierung wird durch die Kulturpflanze, das Anbaugebiet sowie den Anwender beeinflusst. Aufgrund der Vielfalt an physikalisch-chemischen Eigenschaften der verschiedenen Pestizidwirkstoffe existiert auf dem Markt eine große Zahl von verschiedenen flüssigen aber auch festen Formulierungstypen. Aufgrund der Formulierungsadditive ergeben sich bestimmte Anwendungseigenschaften wie Retention, Penetration, Regenfestigkeit und Spreitverhalten. Durch eine spezielle Formulierung soll gewährleistet werden, dass die geringst mögliche Menge Wirkstoff gleichmäßig über eine große Fläche verteilt werden kann (Reduzierung der Aufwandmengen zum Schutze des Verbrauchers und der Umwelt), allerdings unter Gewährleistung weiterhin maximaler Leistung und Wirksamkeit.

Unabhängig vom Formulierungstyp werden alle Pestizidformulierungen für die Anwendung mit Wasser verdünnt und aufgesprüht (mit Wassermengen von 50-1000 1/ha).

Ein wichtiger Formulierungstyp für agrochemische Wirkstoffe ist das Emulsionskonzentrat (EC).

Bei der Erstellung einer EC-Formulierung beginnt man zunächst mit der Auswahl eines geeigneten Lösungsmittels oder Lösungsmittelgemisches. Dieses sollte toxikologisch und ökologisch unbedenklich sowie schwer entflammbar sein. Eine weitere Anforderung ist es einen geeigneten Emulgator für dieses System zu finden, damit die Verdünnung mit Wasser für die Spritzapplikation genügend lange stabil bleibt.

Argochemische Emulsionen sollten mindestens 24 Stunden, besser jedoch 48 Stunden lang stabil bleiben ohne dass sich das Öl absetzt, sich Rahm oder Bodensätze bilden.

Es werden aber auch Wirkstoffe eingesetzt, welche bei Kontakt mit Wasser zur Kristallisation neigen und damit ein Versprühen extrem erschweren. Daher muss auch ein Auskristallisieren des Agro-Wirkstoffes vermieden werden. In Spritzgeräten, die üblicherweise zur Ausbringung wässriger Formulierungen von Pflanzenbehandlungsmitteln verwendet werden, sind mehrere Filter sowie Düsen vorhanden.

Speziell feinmaschige Düsen im Mikrometerbereich können bei der Ausbringung von wässrigen Spritzbrühen auf Basis pestizider Wirkstoffe mehr oder weniger leicht durch den auskristallisierenden Wirkstoff verstopfen.

Eine Beständigkeit der pestizidhaltigen Wirkstoffzusammensetzung gegen vorzeitiges Auskristallisieren innerhalb von 48 Stunden nach Kontakt mit Wasser bzw. in der Spritzbrühe sollte gewährleistet sein.

Eine Untergruppe von Emulsionskonzentraten sind Mikroemulsionen, die aus einer Ölkomponente bestehen, einen großen Anteil eines oder mehrerer Emulgatoren, zumindest einem Pestizid sowie geringe Mengen an Wasser oder sonstigen Zusatzstoffen aufweisen.

Aufgrund der Anwesenheit von Wasser besteht hier eine hohe Anforderung an das Lösemittel um das Pestizid in Lösung zu halten. Mikroemulsionen bieten sich bevorzugt für Insektizide an.

Entscheidend ist dabei das Lösevermögen eines Lösemittels für eine Substanz. Das Lösevermögen ist gegeben, wenn das Lösungsmittel in der Lage ist, die gelöste Substanz in eine echte Lösung zu überführen, aus der die gelöste Substanz und das Lösungsmittel in chemisch unveränderter Form zurück gewonnen werden können. Im Rahmen dieser Erfindung wird nicht nur der Einfluss auf echte Lösungen betrachtet, sondern auch auf Emulsionen, wie sie in Pestizid- oder Insektizidzusammensetzungen oftmals vorliegen. Die Wirksubstanz muss in Lösung bzw. Emulsion gehalten werden und darf nicht durch Sekundärprozesse beispielsweise Kristallisieren oder sich sonst wie aus der Formulierung beispielsweise absetzen oder aufrahmen.

Was in der Vergangenheit noch als akzeptabel galt, ist heutzutage nicht mehr denkbar. Es bestehen hohe Anforderungen an die Formulierungstechnik und die verwendeten Additive, vor allem weil der Ruf nach Abdriftminderung immer größer wird und damit seitens der verwendbaren Düsen höhere Anforderungen bestehen.

Zur Anwendung kommen chemische oder biologische Pflanzenschutzmittel (im Folgenden auch Pestizide genannt) oder Pestizidgemische. Dieses können sein, zum Beispiel Herbizide, Fungizide, Insektizide, Wachstumsregulatoren, Molluskizide, Bakterizide, Viridizide, Mikronährstoffe sowie biologische Pflanzenschutzmittel auf Basis von Naturstoffen oder lebenden oder ver- beziehungsweise bearbeiteten Mikroorganismen. Diese Stoffe können allein oder in beliebigen Mischungen miteinander verwendet werden.

Pestizide Wirkstoffe sind im Zusammenhang mit Ihren Einsatzgebieten z. B. im 'The Pesticide Manual', 14th edition, 2006, The British Crop Protection Council, aufgelistet; biologische Wirkstoffe sind z.B. im 'The Manual of Biocontrol Agents', 2001, The British Crop Protection Council angegeben.

Aus DE-3910921 ist die Verwendung von N-allyl-lactanen und aus EP-A1-0453899 ist die Verwendung von Alkylcarbonsäuredimethylamiden als Kristallisationsinhibitoren für Triazole bzw Azolderivaten bekannt.

Die US-2008/0255127 beschreibt die Verwendung von alkoxylierten Alkylmonoethanolamiden und Phosphaten für die soeben genannten Wirkstoffe.

Die genannten Schutzrechte und Anmeldungen beinhalten Formulierungen, die auf N-methylpyrrolidon (NMP) basieren. NMP ist mittlerweile in einigen südeuropäischen Ländern aufgrund seiner Toxikologie (es besteht die Gefahr, dass das Produkt toxisch auf Föten wirkt aber durch die Haut absorbiert wird) für die Benutzung in agrochemischen Formulierungen verboten, und in weiteren anderen Ländern steht es in der Diskussion und wird weitestgehend vermieden. Damit fällt ein sehr gutes Lösemittel für viele pestizide Wirkstoffe vom Markt. Die genannten Schriften verwenden zudem nur Monoamine als Rohstoffe, keine Polyethylenpolyamine, die zur Bildung von Imidazolinen notwendig wären.

Aus WO-2007/028382 sind Triazolformulierungen, bestehend aus Estern pflanzlicher Öle, wasserlöslichen polaren Co-Lösemitteln und mit Wasser nicht mischbaren Co-Lösemitteln bekannt. Diese Kombination von diversen, unterschiedlichsten oberflächenaktiven Stoffen, macht die Formulierbarkeit aufgrund Wechselwirkungen zwischen den Komponenten selbst, aber auch mit den pestiziden Wirkstoffen sehr unübersichtlich und erschwert und beeinträchtigt auch die Stabilität der Formulierungen selbst.

### Aufgabe der Erfindung:

Es bestehen heutzutage hohe Anforderungen an die Formulierungstechnik. Speziell für Wirkstoffe, die bei Kontakt mit Wasser zur Kristallisation neigen und ein Versprühen extrem erschweren sind diese Anforderungen oft nicht zu erfüllen.

So besteht trotz der zuletzt hohen Aufmerksamkeit, die speziell Triazolformulierungen (von denen vor allem Tebuconazole und Flutriafol zur Kristallisation neigen) zugekommen ist, immer noch ein Bedarf an toxikologisch und ökologisch unbedenklichen Lösungsmitteln. Diese Lösungsmittel sollten zudem schwer entflammbar sein und eine kristallisationshemmende Wirkung aufzeigen. Beschränkt sein sollte dieses Verhalten nicht nur auf Triazole (also Fungizide), sondern allgemein auf zur Kristallisation neigende Pestizide, also auch Insektizide z.B. auf Basis von Pyrethroiden oder auch Herbiziden.

Da für Emulsionskonzentratformulierungen (ECs) zudem meist ein großer Anteil an Emulgatoren, um die Formulierung als Spritzbrühe ansetzen zu können, notwendig ist, wäre es wünschenswert, wenn das Öl bzw. Lösungsmittel, als Hauptkomponente der EC, selbst emulgierende Eigenschaften aufweisen würde, damit Formulierungen mit der geringstmöglichen Anzahl an Additiven hergestellt werden können.

### Lösung:

Überraschenderweise wurde nun gefunden, dass spezielle Reaktionsprodukte aus Fettsäure und Polyethylenpolyaminen und damit hergestellte Zusammensetzungen, enthaltend Alkylamidoaminen, Alkylaminoimidazolinen und freiem Amin, ein bevorzugtes Lösungsvermögen für diverse agrochemische Wirkstoffe besitzen, damit diese speziell bei Kontakt mit Wasser aber auch in der Formulierung während der langen Lagerzeit von teilweise über 2 Jahren (entsprechend den Markterfordernissen) nicht kristallisieren. Dieses Lösungsverhalten ist abhängig vom Molverhältnis der Ausgangsstoffe, den Ausgangssubstanzen und der Reaktionszeit und auch der Reaktionstemperatur.

Gelöst wird diese Aufgabe durch erfindungsgemäße Zusammensetzungen enthaltend Reaktionsprodukte von a) einbasischen Carbonsäuren mit einem geradkettigen, gegebenenfalls verzweigten und eventuell Mehrfachverbindungen und/oder Substituenten enthaltenden Kohlenwasserstoffrest mit 1 bis 2 9 C-Atomen, b) mit Fettaminen, Imidazolinen, Polyaminen, quaternären Ammoniumverbindungen speziell aber Tetraethylenpentamin und/oder N-Alkyl-tetraethylenpentamin und/oder N,N-Dialkyltetraethylenpentamin und/oder Pentaethylenhexamin oder höherer Polyamine und/oder deren Derivate, nach an sich bekanntem Verfahren. Die erhaltenen Reaktionsprodukte weisen eine Mischung aus Alkylamidoaminen, Alkylaminoimidazolinen und freiem Amin in den Zusammensetzungen auf.

Alkylaminoimidazoline sind nur stabil, wenn Amine mit mehr als drei Amingruppen also z.B. Diethylentriamin verwendet werden. Solche Reaktionsprodukte sind aus EP-1283239 A1 bekannt. Die Verwendung ist jedoch als Haftvermittler für bituminöse Massen beschränkt und nicht für agrochemische Formulierungen vorgeschlagen. Zudem sind Diethylentriaminrückstände, die für solche Reaktionen eingesetzt werden, mittlerweile als giftig, umweltgefährdend und ätzend eingestuft und sollten daher für den Einsatz speziell für agrochemische Zwecke, speziell als Lösemittel in hohen Konzentrationen nicht verwendet werden. Die Lösemittelwirksamkeit der auf Diethylentriamin basierten Reaktionsprodukte ist zudem schlechter als die der erfindungsgemässen Reaktionsprodukte, die eine wesentlich höhere Aminzahl aufweisen.

### Herstellung der erfindungsgemäßen Zusammensetzungen:

Im Allgemeinen werden Fettsäure bzw. Fettsäureester und Amin im Molverhältnis 0,6: 1 bis 1,45: 1 zusammengegeben und unter Inertgasatmosphäre unter Rühren auf Reaktionstemperatur von ca. 140-200°C aufgeheizt und das entstehende Kondensat (Wasser oder Alkohol) kontinuierlich abdestilliert. Gegen Ende der Reaktion kann ein Unterdruck zur Entfernung überschüssigen Amins und Resten von Kondensat angelegt werden.

Dem Fachmann ist bekannt, dass zur Herstellung von Verbindungen der Formeln (1) und (2) die Reaktion vorteilhaft bei möglichst niedrigen Temperaturen um ca. 140 bis 180°C durchgeführt wird. Werden die Reaktionstemperaturen erhöht, z.B. auf 210°C, die Reaktionszeiten und gegebenenfalls die Vakuumphase verlängert, werden überwiegend Verbindungen der allgemeinen Formel (3) erhalten.

Es wurde gefunden, dass ein dynamisches Gleichgewicht zwischen den offenkettigen Verbindungen der Formel (1) und (2) und der Ringverbindung der Formel (3) vorliegt. Dieses wurde durch quantitative ¹³C-NMR-spektroskopische Untersuchungen bestätigt. Die Verteilung ist abhängig vom Umsetzungsgrad, dem eingesetzten Molverhältnis der Komponenten und der Temperatur. Je nach Molverhältnis liegt zudem freies Amin mit bis zu 28 Mol-% vor. Das freie Amin wird durch Extraktion bestimmt.

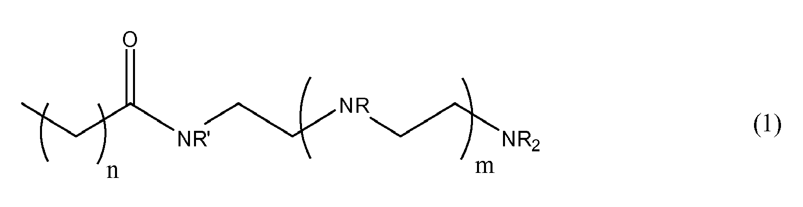

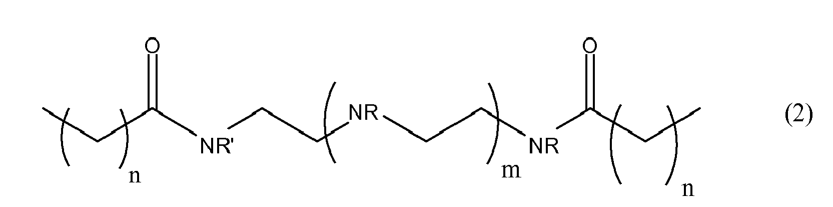

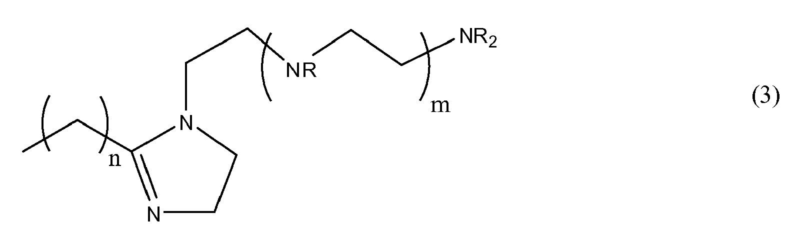

In den Formeln (1) bis (3) entspricht
- R und/oder: R' unabhängig voneinander gleich oder verschiedenen Gruppen aus einem Wasserstoffradikal oder einer Alkylgruppe mit 1 bis 18 Kohlenstoffatomen, die linear oder verzweigt gegebenenfalls auch weiter substituiert sein können, bevorzugt ist R' ein Wasserstoffradikal oder eine Methylgruppe,
- m: ist gleich 2 bis 10 und
- n: ist gleich 1 bis 29, bevorzugt 2 bis 28 und besonders bevorzugt 3 bis 26, wobei der gebildete Kohlenstoffrest gesättigt oder ungesättigt, auch mehrfach, zweifach oder dreifach, ungesättigt sein kann und auch weiter mit weiteren funktionellen Gruppen substituiert sein kann.

Es können auch Mischungen verschiedener Substanzen der Formeln (1) oder (2) oder (3) vorliegen.

Bei Aminzahlen von < 380 mg KOH/g ist das molare Verhältnis von Produkten der Formeln (1) und (2) zu Produkten der Formel (3) etwa 20:70, der Rest besteht aus freiem Amin.

Die erfindungsgemäßen Zusammensetzungen weisen daher im Reaktionsprodukt, das heißt ohne den Zusatz von Wasser und weiteren Adjuvantien, wie sie für agrochemische Zusammensetzungen eingesetzt werden, eine Aminzahl von > 270 mg KOH/g auf.

Die erfindungsgemäßen Zusammensetzungen weisen ein Massenverhältnis zwischen Alkylamidoaminen und Alkylaminoimidazolinen im Verhältnis von 0,125:1 bis 0,35:1 auf.

In den erfindungsgemäßen Zusammensetzungen weist die Mischung aus Alkylamidoaminen, Alkylaminoimidazolinen und freiem Polyethylenpolyamin einen Gehalt an freiem Amin von größer als 0,01 Gew.-%, bevorzugt von größer als 1 Gew.-% und besonders bevorzugt von größer als 3 Gew.-% auf.

Als Fettsäuren für die Herstellung der dieser Erfindung zugrunde liegenden Reaktionsprodukte mit Aminen dienen - allein oder in Mischungen - Fettsäuren wie Essigsäure, Propionsäure, Buttersäure, Capronsäure, Caprylsäure, Caprinsäure, Harzsäure, 2-Ethylhexansäure, Laurinsäure, Myristinsäure, Myristoleinsäure, Palmitinsäure, Palmitoleinsäure, Isostearinsäure, Stearinsäure, Hydroxystearinsäure (Ricinolsäure), Dihydroxystearinsäure, Ölsäure, Linolsäure, Petroselinsäure, Elaidinsäure, Arachinsäure, Gadoleinsäure, Behensäure, Erucasäure, Clupanodonsäure, Lignocerinsäure und Cerotinsäure, Melissensäure sowie die bei der Druckspaltung natürlicher Fette und Öle anfallenden technischen Mischungen wie Ölsäure, Linolsäure, Linolensäure, und insbesondere Rapsölfettsäure, Sojaölfettsäure, Sonnenblumenölfettsäure, Kokosfettsäure und/oder Tallölfettsäure (synonym verwendet wird auch der Begriff Tallöl allein) mitverwendet. Geeignet sind prinzipiell alle Fettsäuren mit ähnlicher Kettenverteilung.

Vorzugsweise werden längerkettige Fettsäuren mit 8 C-Atomen oder mehr eingesetzt, wie insbesondere die in den natürlichen Fetten und Ölen vorkommenden Säuren. Vorzugsweise werden teilgehärtete C_{8/18}-Kokos-bzw. Palmfettsäuren, Rapsölfettsäuren, Sonnenblumenölfettsäuren, Sojaölfettsäuren und Tallölfettsäuren, und insbesondere technische C_{8/18}-Kokosfettsäuren eingesetzt, wobei gegebenenfalls eine Auswahl von cis/trans-Isomeren wie elaidinsäurereiche C_{16/18}-Fettsäureschnitte von Vorteil sein können. Prinzipiell werden einbasische Carbonsäuren mit einem geradkettigen, gegebenenfalls verzweigten und eventuell Mehrfachverbindungen und/oder Substituenten enthaltenden Kohlenwasserstoffrest von 1 bis 29 C-Atomen bevorzugt.

Als Amine für die Herstellung der dieser Erfindung zugrunde liegenden Reaktionsprodukte mit Fettsäuren dienen Tetraethylenpentamin und/oder N-Alkyltetraethylenpentamin und/oder N,N-Dialkyltetraethylenpentamin, substituiertes oder nicht substituiertes Pentaethylenhexamin oder höhere Polyamine und/oder deren Derivate. Die Alkylgruppe wird bestimmt durch verzweigte oder unverzweigte C₁ bis C₁₈-Alkylgruppen, wobei die unverzweigten Alkylgruppen bevorzugt sind, insbesondere werden in den angegebenen Aminen beispielsweise Methyl-, Ethyl-, Propyl-, Butyl-, Pentyl-, Hexyl- oder Docecyl-Gruppen verwendet.

Überraschenderweise konnte für die erfindungsgemäßen Zusammensetzungen festgestellt werden, dass teilweise kein konventioneller Emulgator (wie z.B. Alkylsulfonate, Polyoxyethylen-Fettsäure-Ester, Polyoxyethylen-Sorbitan-Trioleate oder Fettsäure-Mono-di-glyceride) notwendig war, um eine emulgierbare und stabile Formulierung zu erhalten. Die angesetzten Emulsionen waren mindestens über einen Zeitraum von 48 Stunden stabil ohne dass Ölabsetzung, Rahmen oder andersartige Sedimentation stattfindet. Es wird daher angenommen, dass die Kombination aus den erfindungsgemässen Zusammensetzungen und einem Polyethercopolymer und/oder einem alkoxylierten Siloxan zur Selbstemulgierbarkeit ausreicht. Anstelle des genannten Siloxans können auch andere Netzmittel wie Trisiloxane (zum Beispiel wie dem BREAK-THRU^{®} S 240 oder BREAK-THRU^{®} S 278 der Evonik Goldschmidt GmbH) oder alkoxylierte Polyether verwendet werden.

Ein Gegenstand der Erfindung sind somit Zusammensetzungen die weitere Adjuvantien und/oder Netzmittel enthalten.
Insbesondere ist ein weiterer Gegenstand der Erfindung eine Zusammensetzung, die anstelle eines Polysiloxans, wie zum Beispiel dem BREAK-THRU^{®} OE 441, als Netzmittel Trisiloxane und/oder alkoxylierte Polyether verwendet.

Weitere Gegenstände der Erfindung sind die Verwendung der erfindungsgemäßen Zusammensetzungen in Pestizidformulierungen für Pflanzenschutz sowie non-crop-Anwendungen, sowie die Pestizidformulierung selbst. Die Pestizidformulierungen enthalten bevorzugt 30-70 Gew.-% der erfindungsgemäßen Zusammensetzungen in den agrochemischen Formulierungen.

Ebenfalls ein Gegenstand der Erfindung ist die Verwendung der erfindungsgemäßen Zusammensetzungen in Pestizidformulierungen, die auf Mikroemulsionen oder Emulsionskonzentraten basieren.

Das Lösevermögen der erfindungsgemäßen Zusammensetzungen sollte so hoch ausfallen, dass 1-40 Gew.-% eines oder mehrerer Pestizide, bevorzugt 5-27 Gew.-%, in Lösung gehalten werden können. Hierbei können als Zusatz zu den Zusammensetzungen, die der Erfindung zugrunde liegen, auch weitere mineralölbasierte Co-solvents (Ko-Lösemittel) beigemischt werden. Diese sind bevorzugt auf Basis von Solvesso^{®} 150 (Firma Exxon) oder Hydrosol^{®} A 200 ND (Firma DHC Solvent Chemie GmbH) und weisen einen Naphthalen-Gehalt von grösser 2 Gew.-% auf. Ebenso vorteilhaft kann sich der Einsatz von kleiner 5 Gew.-% an Glyceryloleaten (oder dioleaten) erweisen. Hierzu zählen zum Beispiel Produkte der Firma Evonik Goldschmidt GmbH: Antil^{®} 171 (ein Glycerid, coco- mono- und di-, ethoxyliert) oder Antil^{®} 120 (ein PEG-120 Methyl Glucose Dioleat).

Weitere Ausgestaltungen oder Gegenstände der Erfindung ergeben sich aus den Ansprüchen, deren Offenbarungsgehalt vollumfänglich Teil dieser Beschreibung ist.
Die nachfolgenden Beispiele sollen die vorliegende Erfindung näher erläutern, ohne den Schutzbereich einzuschränken, der sich aus der Beschreibung und den Patentansprüchen ergibt.

Die erfindungsgemäßen Zusammensetzungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme einzelner Werte (Bereichen) oder Verbindungen erhalten werden können.

Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen, wie z. B. polymere Trägermaterialien, Säuren oder Ester, beschrieben, die verschiedene Substrukturen oder Formeleinheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als Mittelwert, gemittelt über alle entsprechenden Verbindungen, zu verstehen. Prozentangaben verstehen sich als auf das Gewicht bezogen, soweit nichts anderes explizit angegeben ist.

In den zwecks Ermittlung des Umsetzungsgrades unternommenen analytischen Untersuchungen, wurden Aminzahlen von etwa 270 - 600 mg KOH/g ermittelt.
Das Testen der Aminzahl wurde nach dem Indikatorverfahren gemäß ISO 4315 vollzogen. Hierzu wurde Bromphenolblau (Fa. Merck) zur Erkennung des Umschlagspunktes bei der Titration mit 0,1 N HCl von blau nach grün verwendet. Die Methode dient allgemein zur Bestimmung der Aminzahl in Fettaminen. Sie wird durch Titration des Amins mit einer standardisierten Säure gegen einen Indikator bestimmt. Die Aminzahl (AZ) gibt die mg KOH an, die der Basizität von 1 g Probe entsprechen, daher werden entsprechende Werte in mg KOH/g angegeben.

### Beispiele:

### Anwendungstests:

### A) Prüfung der Kristallisationsbeständigkeit:

Zur Prüfung der Kristallisationseigenschaften werden jeweils ca. 2 l einer wässrigen Lösung, die eine Konzentration von 0,5-1 Gew.-% einer agrochemischen Formulierung enthält, in einer Durchflußapparatur mit Hilfe einer Pumpe 8 Stunden lang durch ein feinmaschiges Sieb mit einer Maschenweite von 100 mesh (entsprechend 150 nm z.B. von der Firma Graco) umgepumpt. Die Lösung, einschließlich des feinmaschigen Siebes bleiben über Nacht bei Raumtemperatur stehen und werden nicht gewechselt, der Umpumptest wird am nächsten Morgen weitere 8 Stunden fortgesetzt. Somit unterliegt die Spritzbrühe einem 24 Stunden Test, bei dem die Lösung 16 Stunden gepumpt wird und 8 Stunden ruht. Nach Beendigung des Testes werden sowohl Lösung als auch Sieb mikroskopisch auf Kristalle untersucht.
Die Prüfung gilt als bestanden, wenn weniger als 10% des Siebes mit Kristallen bedeckt sind. Als weiterer Test wurden zu einer Formulierung Impfkristalle gegeben und geprüft, ob diese bei Lagerung bei 6°C Kristallwachstum verursachen. Als weiterer Eignungstest der Formulierung wurde der CIPAC Test MT 36.3 durchgeführt.

Die agrochemische Formulierung, die zu Testzwecken verwendet wurde, hat die folgende Zusammensetzung: 25 Gew.-% Wirkstoff (Tebuconazol), 5 Gew.-% BREAK-THRU^{®} OE 441 (ein alkoxyliertes Polysiloxan der Fa. Evonik Goldschmidt), 10 Gew.-% Solvesso 150 (Firma Exxon) oder 10 Gew.-% Hydrosol A 200 ND (Firma DHC Solvent Chemie GmbH), 10 Gew.-% BREAK-THRU^{®} DA 646 (ein Polyether copolymer der Fa. Evonik Goldschmidt), 50 Gew.-% einer erfindungsgemässen Zusammensetzung.
Auffallend bei dieser Formulierung ist, dass kein konventioneller Emulgator (wie z.B. Alkylsulfonate, Polyoxyethylen-Fettsäure-Ester, Polyoxyethylen-Sorbitan-Trioleate oder Fettsäure-Mono-di-glyceride) notwendig war, um eine emulgierbare und stabile Formulierung zu erhalten. Die angesetzte Emulsion war mindestens über einen Zeitraum von 48 Stunden stabil ohne dass Ölabsetzung, Rahmen oder andersartige Sedimentation stattfindet.

### 1) Erfindungsgemäßes Beispiel:

Tallölfettsäure (der Fa. Arizonal Chemial B.V.) und Tetraethylenpentamin (der Fa. Aldrich) werden in einem Molverhältnis von 0,8:1,2 eingesetzt und 1 Stunde bei 180°C, dann 3 Stunden bei 210°C umgesetzt.

Das Reaktionsprodukt ist gekennzeichnet durch eine Dichte von ca. 0,931 g/cm³ (25°C, nach DIN 51757), einer Aminzahl von 540 mg KOH/g und einer Viskosität von 170 mPas (25°C, nach DIN 53015). Die Säurezahl (analysiert nach DIN EN ISO 2114) beträgt 1,4 mg KOH/g. Die Säurezahl (SZ) gibt die Anzahl mg KOH an, die notwendig ist, um die in 1g Produkt enthaltenen freien Säuren zu neutralisieren.

Im Gemisch der Reaktionsprodukte liegen die Komponenten analog der Formeln 1-3, analysiert nach ¹³C-NMR und Extraktion, wie folgt vor:
1 Fettsäureamid linear (1) und (2) ca. 16 Gew.-%
2 Fettsäureamid cyclisch (3) ca. 65 Gew.-%
3 Freies Amin (Tetraethylenpentamin) ca. 19 Gew.-%.

Das so charakterisierte Reaktionsprodukt wurde zur Erstellung einer agrochemischen Formulierung auf Basis von Tebuconazol, wie zuvor beschrieben, mit 50 Gew.-% eingesetzt und einem Kristallisationstest unterworfen. Der Kristallisationstest zeigte nach 24 Std. keine Benetzung des Meshfilters mit Kristallen und gilt daher als bestanden.
Die Formulierung ist in ihrer biologischen Wirksamkeit einer bekannten, kommerziell verfügbaren Formulierung gleichwirkend.

### 2) Vergleichsbeispiel:

Tallölfettsäure (der Fa. Arizonal Chemical B.V.) und Tetraethylenpentamin (der Fa. Aldrich) werden in einem Molverhältnis von 1,2:0,8 eingesetzt und 1 Stunde bei 180°C, dann 3 Stunden bei 210°C umgesetzt.

Das Reaktionsprodukt ist gekennzeichnet durch eine Aminzahl von 270 mg KOH/g. Es liegt < 3 Gew.-% freies Amin vor. Die Säurezahl (analysiert nach DIN EN ISO 2114) beträgt 2,4 mg KOH/g. Das so charakterisierte Reaktionsprodukt wird zur Erstellung einer agrochemischen Formulierung auf Basis von Tebuconazol, wie zuvor beschrieben, mit 50 Gew.-% eingesetzt und einem Kristallisationstests unterworfen.

Der Kristallisationstest zeigt, dass mehr als 10% des Meshfilters mit Kristallen besetzt war. Ebenso konnten in der EC-Formulierung selbst schon Kristalle nach einer Lagerung von etwa 1 Monat bei Raumtemperatur detektiert werden, d.h. das Lösungsvermögen dieser Reaktionsprodukte reichte für Tebuconazol nicht aus.

### Feldversuch Brasilien:

Erfindungsgemäße Tebuconazol Formulierungen, wie weiter vorne unter dem Abschnitt Kristallisationsstabilität beschrieben (basierend auf dem vom erfindungsgemässen Beispiel abgeleiteten Reaktionsprodukt mit einer Aminzahl von 540), wurden in Campinas, Sao-Paulo in Brasilien zur Kontrolle des Sojabohnerosts geprüft und mit einer kommerziellen Tebuconazole Formulierung von BayerCropScience Brasil verglichen (Folicur SC 200 g ai/1). GW 1554 enthält 7 Gew.-% Break-thru® OE 441 (ein Polysiloxane, GW 1555 enthält stattdessen 7 Gew.-% Break-thru® S278 (ein Trisiloxan und Superspreiter). Der Vergleich zeigt den Einfluss des Adjuvants. Für den Test wurde die Sojabohnenkulturvarietät "Codetec 214" am 12. Dez.2008 auf der Agro Kosmos Versuchsfarm gepflanzt. Das gesamte Testgebiet wurde unter vergleichbaren landwirtschaftlichen Bedingungen in Bezug auf Pflanzenabstand, Pflanzdichte, chemischer Kontrolle der Unkräuter und Insekten durchgeführt. Wegen des ausreichenden und gut verteilten Niederschlags war es nicht notwendig die Pflanzplots zu bewässern.

Ein randomisiertes Design des Blockes wurde vollständig mit vier identischen Pflanzgruppen und Plotgrößen von sechs Reihen Sojabohnen auf 5 m Länge auf einer Fläche von 15 m ² verwendet (3 x 5 m). Die Plots wurden mit dem Äquivalent von 200 1/ha Wassers gesprüht, dem die Testprodukte und die kommerziellen Standards hinzugefügt wurden. Der Vergleich der Formulierungen erfolgte auf Basis einer Aktivsubstanzdosis pro ha von 100 und von 50 g a.i./ha.

Die Ausbringung der Tebuconazole-Formulierungen erfolgte mit Rucksackausrüstung mit konstantem Druck erfolgt, der durch Kohlensäuredruckflaschen erzeugt wurde. Eine Sprühstab mit sechs Teejet XR 11002 flachen Lüfterdüsen wurde Düse über den Sojabohnenreihen während des Sprühens benutzt. Eine Anwendung der Formulierungen erfolgte am 4.Februar, als die Sojabohnen im R2 Wachstumsstadium (Vollblühte) waren. Zum Zeitpunkt der Behandlung waren die Pflanzen 60-70 Zentimeter hoch und 95% der Pflanzen zeigten bereits erste Sojabohnerostpusteln auf den unteren Blättern, verursacht durch den Pilz *Phakopsora pachyrhizi.* Nach der Anwendung der Formulierungen wurden der Befall laufend kontrolliert und die Kontrolle nach 21 Tagen und 35 Tage nach Ausbringung der Formulierung protokolliert - siehe Zusammenfassung der Ergebnisse in Tabelle 1. Die Auswertungen in jedem Plot schlossen zwei Verfahren ein: eine Begutachtung auf dem Feld und eine zweite Begutachtung im Labor. Bei der Felduntersuchung des Befalls wurden pro Plot von unterschiedlichen Pflanzen jeweils 10 Blättchen aus der unteren Hälfte des Blattbestands eines zentralen Stamms gesammelt, und 10 von der oberen Hälfte des Blattbestands. Dieses lieferte 20 Blättchen von jedem Plot. Die gesammelten Proben wurden am gleichen Tag in einem Polystyrolkasten mit Eis bei einer Temperatur von 7 bis 8 °C zum Labor transportiert. Vom Versuchsfeld bis zum Labor dauerte es ungefähr 30 Minuten. Im Labor wurden die 20 Proben jedes Plots auf ein Negatoscop (diese Ausrüstungen erzeugt Fluoreszenz Licht unter dem Blättchen), mit den abaxial Einfassungen zum Beobachter gelegt, weil die Krankheit auf dieser Oberfläche der Blätter erkennbar ist. Sojabohnerost in jedem Blättchen wurde durch Vergleich mit einem Standard ausgewertet, der % Blattbereich infiziert mit Sojabohnerost anzeigt. Die Infektionsbewertungen der 20 Blätter wurden addiert und ein Durchschnitt errechnet, der als ein Wert pro Plot angenommen wurde. Von den 4 Wiederholungen pro Behandlung wurde ein Mittel errechnet. Die 4 Werte pro Behandlung wurden auch verwendet, um eine ANOVA-Analyse für statistische relevante Unterschiede bei den 95% Wahrscheinlichkeiten durchzuführen. An jedem der Beurteilungstage wurden die Sammlungen und die Laboreinschätzung am jeweils gleichen Tag durchgeführt.

Die Resultate sind in Tabelle 1 zusammengefasst. Es ist eindeutig erkennbar, dass die erfindungsgemässen Formulierungen erheblich besser als der kommerzielle Standard wirken, bei Vergleich der gleichen Konzentrationen der Aktivsubstanz (Tebuconazol) in Gramm pro Hektar.

**Tabelle 1**

| Behandlung | A.I. Dosis / ha Infizierte Blattfläche (%)¹ mit Soyabohnenrost nach | | |
|---|---|---|---|
| | | 21 Tagen | 35 Tagen |
| Folicur Standard | 100 | 2.5 c | 13.5 c |
| | 50 | 4.3 b | 18.1 b |
| | | | |
| GW1554 | 100 | 1.4 g | 6.7 f |
| | 50 | 1.9 e | 9.1 e |
| | | | |
| GW1555 | 100 | 1.8 f | 8.9 e |
| | 50 | 2.2 d | 10.5 d |
| | | | |
| Kontrolle unbehandelt | | 6.7 a | 33.6 a |

| | | | |
|---|---|---|---|
| ¹ Zahlen mit gleichem Kenn-Buchstaben sind statistisch nicht differenzierbar bei P=0.05 (ANOVA) | | | |

## Patentansprüche

1. Zusammensetzungen enthaltend Reaktionsprodukte aus
a) einer oder mehreren einbasischen Carbonsäuren mit einem geradkettigen, gegebenenfalls verzweigten, gegebenenfalls Mehrfachbindungen und/oder weitere Substitutenten enthaltenden Kohlenwasserstoffrest mit 1-29 C Atomen, mit
b) Polyethylenpolyamin
nach an sich bekanntem Verfahren, wobei die Umsetzung für mindestens 1,5 Stunden bei Temperaturen > 200°C erfolgt,
als Lösemittel für agrochemische Wirkstoffe.

2. Zusammensetzungen gemäß Anspruch 1 enthaltend Komponenten gemäß den Formeln (1), (2) und (3) 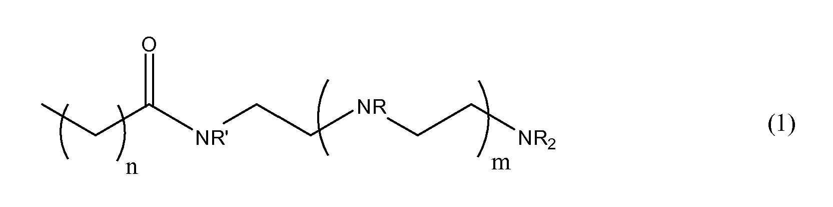 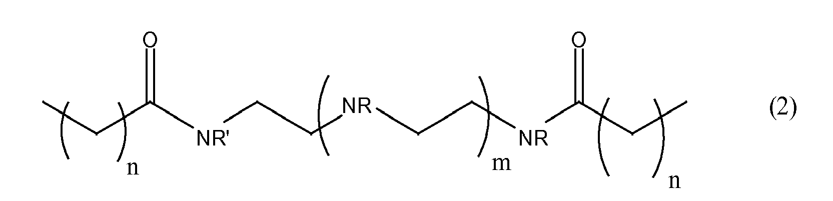 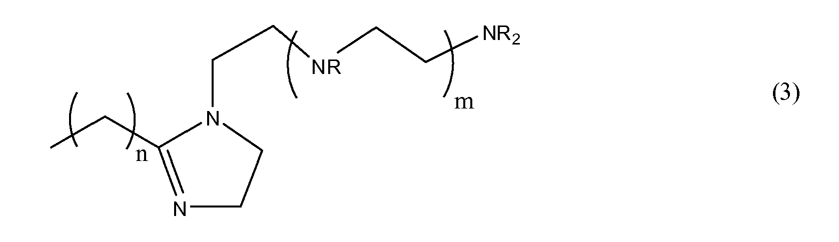 wobei
R und/oder R' unabhängig voneinander gleich oder verschiedenen Gruppen aus einem Wasserstoffradikal oder einer Alkylgruppe mit 1 bis 18 Kohlenstoffatomen, die linear oder verzweigt gegebenenfalls auch weiter substituiert sein können, entspricht,
m gleich 2 bis 10 ist und
n gleich 1 bis 29 ist, wobei der gebildete Kohlenstoffrest gesättigt oder ungesättigt, auch mehrfach, zweifach oder dreifach, ungesättigt, und auch weiter mit weiteren funktionellen Gruppen substituiert sein kann.

3. Zusammensetzungen gemäß zumindest einem der Ansprüche 1 oder 2, **dadurch gekennzeichnet, dass** die Reaktionsprodukte Alkylamidoamine, Alkylaminoimidazoline und freies Amin enthalten.

4. Zusammensetzungen nach zumindest einem der Ansprüche 1 bis 3, **dadurch gekennzeichnet, dass** das Lösevermögen der Zusammensetzungen ausreicht um 1 bis 40 Gew.-% eines oder mehrerer Pestizide in Lösung zu halten.

5. Zusammensetzungen nach zumindest einem der Ansprüche 1 bis 4, **dadurch gekennzeichnet, dass** die Reaktionspartner a) und b) in einem Molverhältnis von 0,6 : 1 bis 1,45 : 1 eingesetzt werden.

6. Zusammensetzungen nach zumindest einem der Ansprüche 1 bis 5, **dadurch gekennzeichnet, dass** sie als Reaktionprodukt eine Aminzahl von > 270 mg KOH/g aufweisen.

7. Zusammensetzungen nach zumindest einem der Ansprüche 1 bis 6, **dadurch gekennzeichnet, dass** Alkylamidoamine und Alkylaminoimidazoline im Massenverhältnis von 0,125:1 bis 0,35:1 vorliegen.

8. Zusammensetzungen nach zumindest einem der Ansprüche 1 bis 7, **dadurch gekennzeichnet, dass** eine Mischung aus Alkylamidoaminen, Alkylaminoimidazolinen und freiem Polyethylenpolyamin einen Gehalt an freiem Amin von > 0,01 Gew.-% aufweist.

9. Zusammensetzungen nach zumindest einem der Ansprüche 1 bis 8, **dadurch gekennzeichnet, dass** als Polyethylenpolyamin Tetraethylenpentamin und/oder N-Alkyltetraethylenpentamin und/oder N,N-Dialkyltetraethylenpentamin, substituiertes oder nicht substituiertes Pentaethylenhexamin oder höhere Polyamine und/oder deren Derivate verwendet werden.

10. Zusammensetzungen nach zumindest einem der Ansprüche 1 bis 8, **dadurch gekennzeichnet, dass** als Komponente (a) Essigsäure, Propionsäure, Buttersäure, Capronsäure, Caprylsäure, Caprinsäure, Harzsäure, 2-Ethylhexansäure, Laurinsäure, Myristinsäure, Myristoleinsäure, Palmitinsäure, Palmitoleinsäure, Isostearinsäure, Stearinsäure, Hydroxystearinsäure (Ricinolsäure), Dihydroxystearinsäure, Ölsäure, Linolsäure, Petroselinsäure, Elaidinsäure, Arachinsäure, Gadoleinsäure, Behensäure, Erucasäure, Clupanodonsäure, Lignocerinsäure und Cerotinsäure, Melissensäure sowie die bei der Druckspaltung natürlicher Fette und Öle anfallenden technischen Mischungen wie Ölsäure, Linolsäure, Linolensäure, Rapsölfettsäure, teilgehärtete C_{8/18}-Kokos- oder Palmfettsäuren Sojaölfettsäure, Sonnenblumenölfettsäure, Kokosfettsäure und/oder Tallölfettsäure verwendet werden.

11. Zusammensetzungen nach zumindest einem der Ansprüche 1 bis 10, **dadurch gekennzeichnet, dass** als Komponenten (a) Tallölfettsäure und (b) Tetraethylenpentamin verwendet werden.

12. Zusammensetzung gemäß zumindest einem der Ansprüche 1 bis 11 enthaltend weitere Adjuvantien und/oder Netzmittel.

13. Zusammensetzung gemäß Anspruch 12, **dadurch gekennzeichnet, dass** als Netzmittel Tri- und/oder Polysiloxane oder alkoxylierte Polyether enthalten sind.

14. Verfahren zur Herstellung von Zusammensetzungen gemäß zumindest einem der Ansprüche 1 bis 11, **dadurch gekennzeichnet, dass** die Umsetzung der Komponenten (a) und (b) bei Temperaturen > 200°C für mindestens 1,5 Stunden erfolgt.

15. Verwendung der Zusammensetzungen nach zumindest einem der Ansprüche 1 bis 13 in Pestizidformulierungen für Pflanzenschutz sowie non-crop-Anwendungen.

16. Verwendung der Zusammensetzungen nach zumindest einem der Ansprüche 1 bis 13 in Pestizidformulierungen, die auf Mikroemulsionen oder Emulsionskonzentraten basieren.

17. Pestizidformulierung enthaltend eine Zusammensetzung nach zumindest einem der Ansprüche 1 bis 13.

18. Verwendung der Zusammensetzungen nach zumindest einem der Ansprüche 1 bis 13 in Pestizidformulierungen, wobei 30-70 Gew.-% der Zusammensetzungen in agrochemischen Formulierungen eingesetzt werden.
